Europäisches Patentamt

European Patent Office

Office européen des brevets

(19)

(11) Numéro de publication: **0 192 562**

**A1**

(12)

# DEMANDE DE BREVET EUROPEEN

(21) Numéro de dépôt: 86400298.5

(22) Date de dépôt: 11.02.86

(51) Int. Cl.⁴: **G01S 7/44**

(30) Priorité: 15.02.85 FR 8502250

(43) Date de publication de la demande:
**27.08.86 Bulletin 86/35**

(84) Etats contractants désignés:
**DE GB IT NL SE**

(71) Demandeur: **THOMSON-CSF**
**173, Boulevard Haussmann**
**F-75379 Paris Cedex 08(FR)**

(72) Inventeur: **Andrieu, Jean-Pierre**
**THOMSON-CSF SCPI 19, avenue de Messine**
**F-75008 Paris(FR)**
Inventeur: **Henri, Jean-Claude**
**THOMSON-CSF SCPI 19, avenue de Messine**
**F-75008 Paris(FR)**

(74) Mandataire: **Benoit, Monique et al**
**THOMSON-CSF SCPI 19, avenue de Messine**
**F-75008 Paris(FR)**

(54) **Procédé d'extension de la gamme des fréquences des récurrences radar acceptables par un transformateur numérique d'images et moyens de mise en oeuvre de ce procédé.**

(57) L'invention a pour objet un procédé et un dispositif pour l'extention de la gamme des fréquences des récurrences acceptables par un transformateur numérique d'images (TDI), destiné au traitement d'une image de type radar.

Le procédé consiste principalement à modifier la fréquence des incréments d'angle ($\epsilon$) reçus, fournissant la position angulaire ($\Theta$) de l'antenne radar par rapport à une direction de référence (Nord), de façon à les rendre compatibles avec les informations vidéo (récurrences) reçues à la fréquence de répétition du radar (PRF), évitant ainsi une irrégularité de l'image radar ou un défaut de rémanence.

FIG_2

EP 0 192 562 A1

## PROCEDE D'EXTENSION DE LA GAMME DES FREQUENCES DES RECURRENCES RADAR ACCEPTABLES PAR UN TRANSFORMATEUR NUMERIQUE D'IMAGES ET MOYENS DE MISE EN OEUVRE DE CE PROCEDE

La présente invention concerne un transformateur numérique d'images et elle a plus particulièrement pour objet un procédé d'extension de la gamme des fréquences des récurrences radar qu'il est susceptible d'accepter, ainsi que des moyens de mise en oeuvre de ce procédé.

On rappelle qu'un transformateur numérique d'images - (ou TDI) a pour rôle essentiel de transformer une image fournie en coordonnées polaires et à renouvellement relativement lent en une image de type télévision, lumineuse, permettant son exploitation en ambiance éclairée. Cette image à renouvellement lent est généralement une image radar mais ce peut être également une image en provenance d'un sonar, d'un senseur infra-rouge ou d'un système d'échographie, qu'on veut visualiser sur un écran fonctionnant en mode télévision.

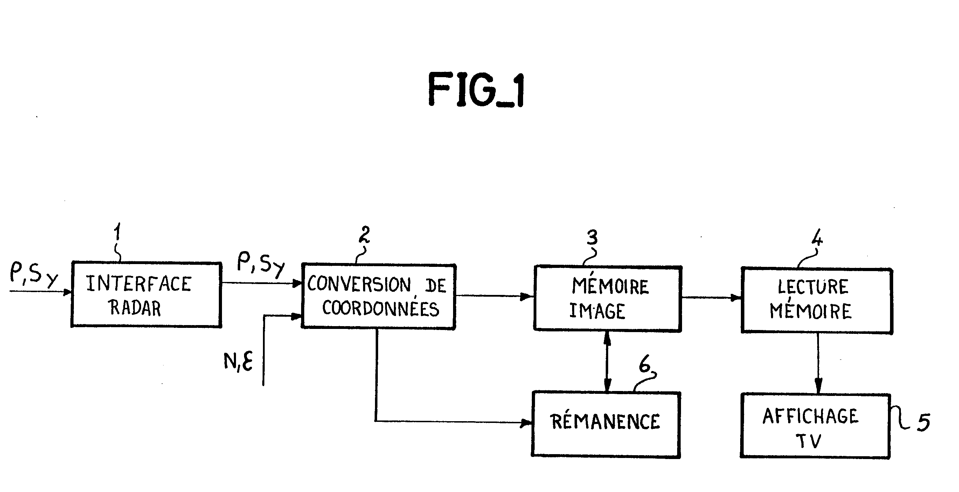

Dans le cas plus particulier d'un radar, un TDI comporte classiquement les éléments représentés sur la figure 1, à savoir :

- un moniteur de télévision 5 sur lequel les informations radar sont affichées ;

- un circuit 1 d'interface radar qui reçoit les signaux de vidéo en provenance du radar ; on rappelle que les signaux de vidéo sont constitués, d'une part, par un top de synchronisation ($S_y$), indiquant qu'une impulsion est émise par le radar, et, d'autre part, par la vidéo ($\rho$) proprement dite, constituée par toutes les réponses (échos) à cette impulsion ; ce circuit d'interface assure notamment la conversion en numérique du signal vidéo incident (analogique), et un éventuel traitement du signal vidéo, dont le détail est variable selon le type de radar ;

- un dispositif 2 de conversion de coordonnées qui reçoit les signaux de vidéo fournis par le circuit 1 : en effet, les informations radar sont fournies en coordonnées polaires et elles doivent être inscrites sur l'écran de télévision en coordonnées cartésiennes ; à cet effet, le dispositif 2 reçoit en outre des signaux représentatifs de la rotation de l'antenne du radar ; ces signaux de rotation ont pour rôle d'indiquer à tout moment la position angulaire du faisceau du radar (de l'antenne du radar), celui-ci tournant de façon régulière, par rapport à une direction de référence, en général le Nord ; les signaux de rotation sont constitués d'une part par un signal Nord (N), qui est un top à chaque passage du faisceau au Nord, et d'autre part par un signal d'incrément d'angle ($\epsilon$), indiquant que le faisceau a tourné d'$1/n^e$ de tour par rapport à l'incrément précédent, si $n$ incréments correspondent à 360° ;

- une mémoire 3, appelée mémoire image, dont la capacité est adaptée au standard de télévision utilisé, c'est-à-dire qu'elle doit comporter autant de cases mémoire que l'image affichée sur le moniteur de télévision comporte de points ; en outre, la luminance de chaque point est codée à l'aide d'un certain nombre de bits, par exemple 3 bits autorisant 8 niveaux de luminosité pour chaque point ; les phases de lecture, à destination du moniteur de télévision, et d'écriture de l'information radar fournie par le circuit 2 sont asynchrones : la lecture est prioritaire et, pendant une phase de lecture, l'écriture est arrêtée ;

- un circuit 4 de lecture, assurant la génération des signaux de synchronisation télévision, la lecture d'une ou plusieurs cases mémoire et la conversion numérique-analogique des informations lues pour engendrer le signal vidéo télévision destiné au moniteur 5 ;

- un circuit 6 dit de rémanence qui a pour rôle de créer, pour des informations numériques mémorisées pour lesquelles il n'existe pas de modification due au vieillissement, un effet de rémanence comparable à celui qui est produit sur un tube rémanent, où la brillance d'un point commence à décroître dès qu'il est inscrit.

Dans un tel système, le processus d'écriture en mémoire est le suivant. La vidéo est constituée par les réponses (échos) à une impulsion émise par le radar et elle est fournie à une fréquence qui est la fréquence de répétition de l'émission de ces impulsions, appelée PRF - (pour Pulse Repetition Frequency en Anglais). Il est à noter que la PRF est déterminée par la portée du radar : en effet, la portée du radar est la distance maximale pour laquelle un écho est enregistrable, ce qui détermine un temps d'aller-retour de l'impulsion entre le radar et la cible et, par suite, une période ou une fréquence de répétition. Les informations vidéo fournies à la fréquence PRF sont appelées ci-après récurrences. Les incréments d'angle $\epsilon$ sont fournis par ailleurs, en général par le codeur d'antenne, de façon asynchrone par rapport aux récurrences ; on appelle $\Theta$ l'angle résultant, à un instant donné, que fait le faisceau radar avec la direction de référence (Nord) ; l'information vidéo affectée à chacune des $n$ directions $\Theta$ du faisceau est appelée ci-après radiale. Lorsque le système radar fournit $n$ incréments d'angle, on souhaite généralement visualiser $n$ radiales. Il est alors nécessaire d'affecter les différentes récurrences aux différentes radiales, c'est-à-dire une (ou plusieurs) récurrence(s) à chaque radiale. Les différents points de chaque radiale sont ensuite inscrits en mémoire image aux adresses calculées en coordonnées cartésiennes.

Toutefois, la périodicité des incréments d'angle $\epsilon$ étant donnée par l'antenne et la fréquence PRF étant déterminée par ailleurs par la portée du radar, il apparaît que, dans certain cas, ces valeurs peuvent être telles qu'on se trouve dans une des configurations défavorables suivantes :

- soit la fréquence des incréments est trop faible par rapport à la fréquence PRF : parmi les récurrences reçues à la fréquence PRF, il y a alors des récurrences qui ne correspondent à aucune valeur de $\Theta$ ; soit elles ne sont alors pas inscrites en mémoire et sont perdues, soit elles sont préalablement regroupées (d'une façon qui peut n'être pas constante d'une radiale à l'autre ou d'un tour d'antenne à l'autre) et inscrites en mémoire ; l'inconvénient en est une erreur de positionnement des échos ; en outre, cette erreur peut varier d'un tour à l'autre et, par suite, perturber le fonctionnement de la rémanence ;

- soit la fréquence des incréments $\epsilon$ est trop élevée par rapport à la fréquence PRF et il y a des valeurs de l'angle $\Theta$ pour lesquelles on ne dispose pas d'information radar - (récurrence) correspondante: il n'y a alors pas d'inscription en mémoire faute d'information ; l'inconvénient en est notamment une irrégularité de l'image par manque d'une radiale de temps en temps, ainsi que la perturbation du fonctionnement de la rémanence.

Pour éviter ces inconvénients, on est conduit en pratique à modifier la fréquence PRF, dans un sens conduisant à limiter la portée du radar.

La présente invention a pour objet un procédé qui permet de s'affranchir de ces défauts et limitations.

A cet effet, le procédé comporte une étape supplémentaire de transformation de la valeur de l'incrément d'angle $\epsilon$ en une valeur $\epsilon'$, fonction de la fréquence PRF, afin d'éviter toute perte d'information, la conversion de coordonnée et l'attribution des récurrences se faisant selon la valeur transformée $\epsilon'$.

L'invention a également pour objet des moyens de mise en oeuvre de ce procédé.

D'autres objets, particularités et résultats de l'invention ressortiront de la description suivante, donnée à titre d'exemple non limitatif et illustrée par les dessins annexés, qui représentent :

- la figure 1, déjà décrite, le schéma synoptique d'un TDI ;

- la figure 2, le schéma partiel d'un TDI selon l'invention ;

- les figures 3, a et b, deux diagrammes se rapportant au procédé selon l'invention ;

- la figure 4, le schéma partiel d'une variante d'un TDI selon l'invention.

Sur ces différentes figures, les mêmes références se rapportent aux mêmes éléments.

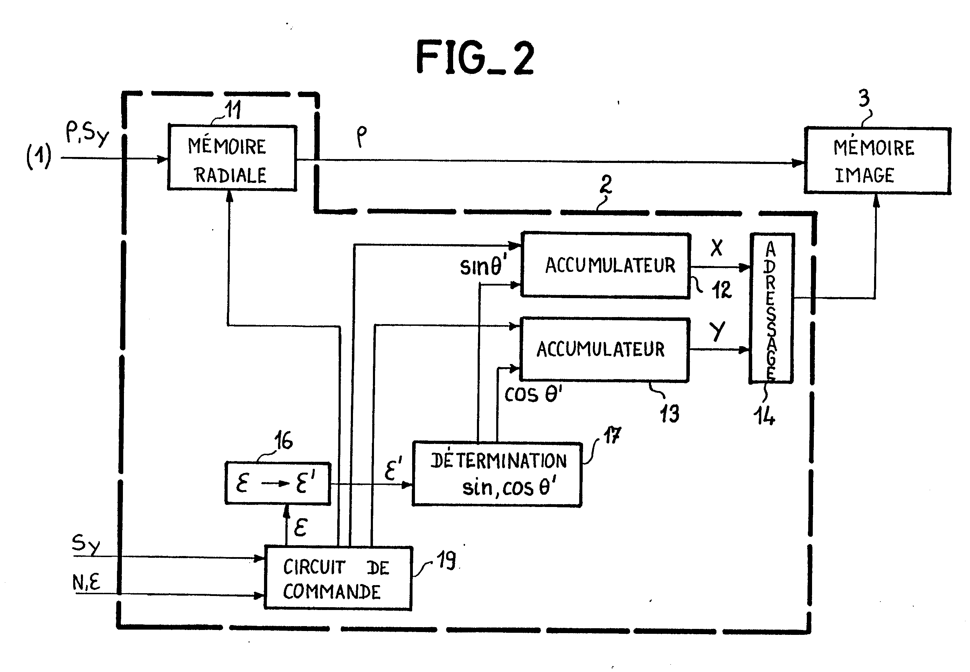

Sur la figure 2, on a donc représenté les signaux de vidéo ($\rho$, $S_y$) reçus par le dispositif de conversion de coordonnées 2 et, plus précisément, par une mémoire 11 de ce circuit, dite mémoire radiale, dont la fonction est de mémoriser les récurrences ($\rho$) au fur et à mesure de leur arrivée ; la mémoire 11 peut contenir distinctement une ou plusieurs récurrences.

Parallèlement, un circuit de commande 19 du dispositif de conversion de coordonnée (2) reçoit, en provenance du codeur d'antenne du radar, les informations de rotation, à savoir, l'incrément d'angle $\epsilon$ permettant de déterminer l'angle $\Theta$ que fait l'antenne avec le nord, ainsi que le signal de synchronisation $S_y$. Le circuit 19 est par exemple réalisé à l'aide d'un microprocesseur. L'incrément $\epsilon$ est ensuite transmis à des moyens 16 assurant la transformation de la périodicité de $\epsilon$ en une périodicité $\epsilon'$, selon un processus décrit plus loin. Les impulsions à périodicité $\epsilon'$ sont transmises à des moyens 17 de détermination de la valeur des fonctions trigonométriques, sinus et cosinus par exemple, de l'angle $\Theta'$ correspondant à $\epsilon'$. Le processus de détermination des fonctions trigonométriques de l'angle $\Theta'$ est également décrit plus loin.

Les valeurs de $\sin \Theta'$ et de $\cos \Theta'$ sont adressées respectivement à deux accumulateurs 12 et 13, qui reçoivent par ailleurs du circuit de commande 19 les coordonnées ($X_0$, $Y_0$) du radar et une commande initialisant le processus d'accumulation. On rappelle qu'un accumulateur est constitué par un additionneur entouré d'un registre d'entrée et un registre de sortie, la sortie de ce dernier étant dirigée également vers l'additionneur ; la valeur à accumuler ($\sin \Theta'$ ou $\cos \Theta'$) est chargée dans le registre d'entrée et l'accumulation est déclenchée, par l'intermédiaire du circuit 19, par le signal de synchronisation $S_y$. A chaque étape de l'accumulation, pour une même valeur de $\Theta'$ donc pour une même radiale, les accumulateurs délivrent respectivement les coordonnées cartésiennes $X_i$, $Y_i$ avec, par exemple pour des accumulations en sinus et cosinus :

$$X_i = X_{i-1} + \sin \Theta'$$

$$Y_i = Y_{i-1} + \cos \Theta'.$$

Les coordonnées $X_i$ et $Y_i$ sont dirigées vers un dispositif 14 d'adressage de la mémoire image 3, qui reçoit en synchronisme (synchronisation $S_y$) la grandeur $\rho$ à mémoriser, la mémoire radiale 11 étant également commandée par le circuit 19.

Ainsi qu'il a été dit ci-dessus, les tops d'incrément d'angle $\epsilon$ sont remplacés par les tops $\epsilon'$ dont la périodicité, différente de celle des tops $\epsilon$ et adaptée à la fréquence PRF, permet d'éviter les perturbations dans le tracé de l'image radar ou dans sa rémanence. La fréquence des tops $\epsilon'$ est déterminée comme indiqué ci-après pour être aussi proche que possible de la fréquence PRF, ou éventuellement d'un sous-multiple de celle-ci.

Afin notamment de conserver un maximum de résolution à l'image et d'éviter toute discontinuité au niveau de la direction de référence (le Nord), on choisit la fréquence des tops $\epsilon'$ telle qu'un top $\epsilon'$ sur $\underline{n}$ tops $\epsilon$ coïncide avec un top $\epsilon$, avec $\underline{n}$ diviseur du nombre N total de tops $\epsilon$ pour une rotation de 360° du faisceau radar ; en outre, entre deux telles coïncidences, on engendre (n-2) tops $\epsilon'$ équirépartis dans l'intervalle.

La génération de $\epsilon'$ à partir de $\epsilon$ (bloc 16, figure 2) est réalisée à l'aide d'un circuit temporisateur (un monostable par exemple), retardant chaque top $\epsilon$ d'un ou plusieurs intervalles de temps prédéterminés ($\Delta$).

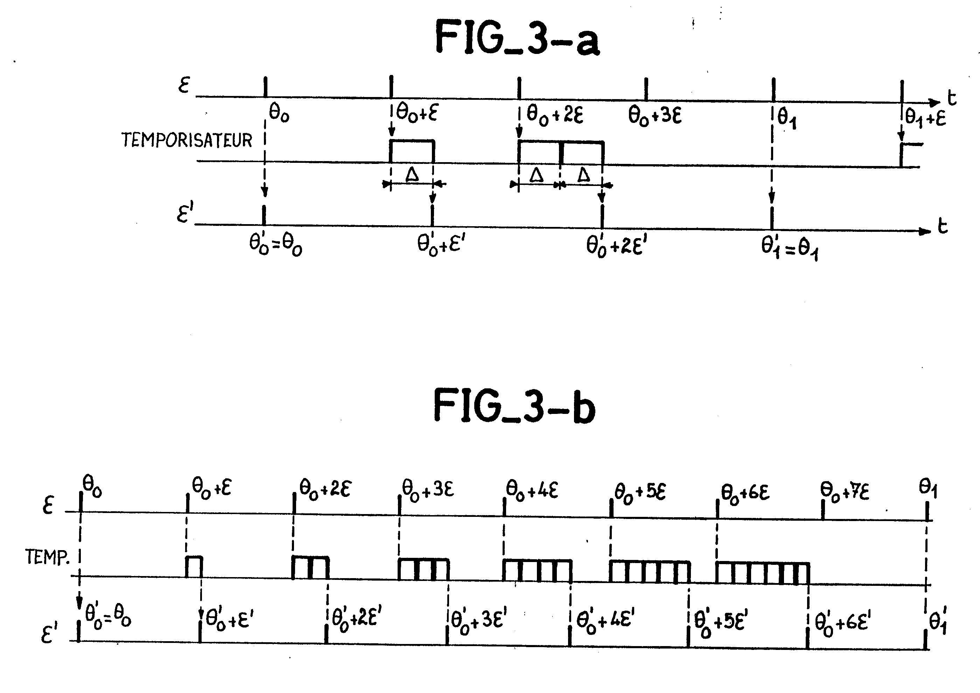

La figure 3a représente une application de ce qui précède pour n = 4.

La première ligne de cette figure représente la succession dans le temps des tops $\epsilon$ : les premier et cinquième tops correspondent à des angles $\Theta_0$ et $\Theta_1$, respectivement, par rapport au Nord, pour lesquels il y a coïncidence avec un top $\epsilon'$. La succession dans le temps des tops $\epsilon'$ est représentée à la troisième ligne. Entre les angles $\Theta_0$ et $\Theta_1$ sont reçus trois tops $\epsilon$, correspondant à des angles notés $\Theta_0 + \epsilon$, $\Theta_0 + 2\epsilon$ et $\Theta_0 + 3\epsilon$.

La deuxième ligne représente le retard conféré par le temporisateur 16 à certains des tops $\epsilon$ pour engendrer les tops $\epsilon'$, sur commande du circuit 19. Pour l'angle $\Theta_0$, il y a coïncidence des tops $\epsilon$ et $\epsilon'$; le temporisateur n'intervient pas. L'incrément $\epsilon$ suivant ($\Theta_0 + \epsilon$) déclenche le temporisateur qui délivre un signal, constituant le deuxième top $\epsilon'$, après un retard prédéfini $\Delta$. L'angle correspondant est noté $\Theta'_0 + \epsilon'$. L'incrément $\epsilon$ suivant ($\Theta_0 + 2\epsilon$) déclenche le temporisateur qui délivre un retard double (2 $\Delta$) pour fournir le troisième top $\epsilon'$ ($\Theta_0' + 2\epsilon'$). L'incrément $\epsilon$ suivant ($\Theta_0 + 3\epsilon$) ne donne lieu à aucun top $\epsilon'$. Enfin, l'incrément $\epsilon$ suivant ($\Theta_1$) coïncide à nouveau avec $\epsilon'$.

Il apparaît que, pour n = 4 tops $\epsilon$, on a engendré n - 1 = 3 tops $\epsilon'$, avec coïncidence des tops $\epsilon$ et $\epsilon'$ une fois tous les n = 4 tops $\epsilon$.

La figure 3b représente un autre exemple de génération de tops $\epsilon'$, avec n = 8 tops $\epsilon$ et donc n - 1 = 7 tops $\epsilon'$, avec les mêmes notations.

La durée $\Delta$ du retard de base conféré au top $\epsilon$ pour former le top $\epsilon'$ est, lorsqu'on crée (n - 1) tops $\epsilon'$ pour $\underline{n}$ tops $\epsilon$, $\Delta =$ , $\epsilon$ désignant alors l'intervalle de temps entre deux tops $\epsilon$.

Le nombre $\underline{k}$ de retards élémentaires $\Delta$ imprimés à un top $\epsilon$ est donné par le numéro d'ordre des tops $\epsilon$ reçus depuis l'angle ($\Theta_0$) auquel les tops $\epsilon$ et $\epsilon'$ sont en coïncidence : $\Theta_0 + k. \epsilon$ donne $\Theta_0 + k.\epsilon'$ après un retard égal à $k.\Delta$.

Il est à noter que pour pouvoir utiliser un même circuit 16 pour engendrer les tops $\epsilon'$ dans le cas de la figure 3a ou dans le cas de la figure 3b, il suffit de diviser le retard élémentaire $\Delta$ par deux, pour donner $\Delta' = \frac{\Delta}{2}$, et d'appliquer $2\Delta'$ à la place de $\Delta$ dans le cas de la figure 3a.

Par ailleurs, il est bien entendu possible d'utiliser des lois de correspondance plus complexes entre $\epsilon$ et $\epsilon'$, comme $(n - p)$ tops $\epsilon'$ correspondant à $\underline{n}$ tops $\epsilon$, p étant un entier quelconque ; toutefois, le traitement des tops $\epsilon'$ ainsi obtenus est alors plus complexe.

Selon l'invention, les récurrences incidentes sont donc affectées aux angles $\Theta'$ obtenus à partir des tops $\epsilon'$, et tracées sur l'image aux angles $\Theta'$ considérés. De la sorte, l'information incidente (récurrences) est mieux exploitée, les radiales sont tracées aux mêmes positions d'un tour d'antenne à l'autre (répétitivité), ce qui évite les problèmes de rémanence, et enfin elles peuvent être régulièrement espacées (équirépartition), sans saut de radiale par manque de récurrence, ce qui conserve la régularité de l'image.

Dans un mode de réalisation, pour obtenir les fonctions $\sin \Theta'$ et $\cos \Theta'$ nécessaires à la conversion de coordonnées, il est possible de stocker dans une mémoire morte (17), du type PROM par exemple, la valeur des fonctions trigonométriques (sinus et cosinus) que les tops $\epsilon'$ successifs permettront d'adresser. Cette solution est simple mais présente l'inconvénient d'être spécifique à la fréquence choisie pour les tops $\epsilon'$.

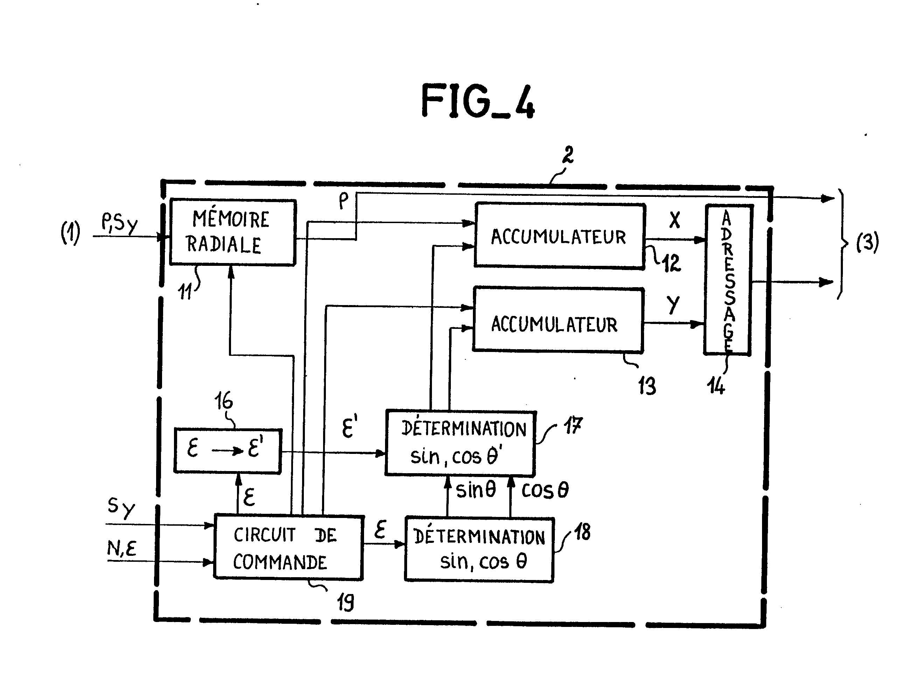

On a représenté figure 4 une variante de réalisation du dispositif de conversion 2, adaptée aux applications dans lesquelles on souhaite pouvoir changer la fréquence des incréments $\epsilon'$.

Cette variante comporte une mémoire 18 dans laquelle est stockée une série de valeurs des fonctions trigonométriques, celles qui correspondent aux angles $\Theta$ par exemple. Les fonctions trigonométriques relatives aux angles $\Theta'$ sont alors déduites de celles des angles $\Theta$ par le circuit 17, par interpolation linéaire par exemple selon les expressions suivantes :

$$\sin \Theta' = \sin \theta + k. \frac{\sin (\theta + 1) - \sin \theta}{n - 1}$$

$$\cos \Theta' = \cos \theta + k. \frac{\cos (\theta + 1) - \cos \theta}{n - 1}$$

$\underline{n}$ étant défini comme précédemment et $\underline{k}$ variant de 0 à n - 2.

Dans une variante de réalisation, le calcul d'interpolation effectué par le circuit 17 peut l'être par le bloc de commande 19, lorsque celui-ci est réalisé à l'aide d'un microprocesseur ; le bloc 17 de la figure 4 est alors supprimé, les informations et commandes y aboutissant étant reportées sur le bloc 19.

Si les moyens 16 et 17 forment un ensemble traitant à la fois la réception des incréments $\epsilon$, le lancement du temporisateur et le calcul d'interpolation linéaire, il est à noter que le temps disponible pour la phase de calcul d'interpolation, opération démarrant sur l'arrivée de l'incrément $\epsilon'$, se raccourcit au fur et à mesure que $\underline{k}$ devient grand. Cet intervalle de temps, séparant un top $\epsilon'$ du top $\epsilon$ qui suit, est égal à $(n - 1 - k).\frac{\epsilon}{n-1}$

Il est donc nécessaire soit de limiter la valeur de $\underline{n}$, donc de $\underline{k}$, soit, si la durée de l'interpolation linéaire numéro $\underline{k}$ est supérieure à $(n - 1 - k).\frac{\epsilon}{n-1}$ de prévoir au sein du calcul d'interpolation l'arrivée éventuelle d'un top $\epsilon$ et des moyens pour relancer le temporisateur le cas échéant.

Dans une autre variante de réalisation, on modifie la formule d'interpolation pour que le temps nécessaire à ce calcul soit, comme le temps disponible pour l'effectuer, une fonction décroissante de $\underline{k}$. Cela ne dispense pas dans tous les cas de devoir prendre en compte l'arrivée d'un top $\epsilon$ en cours d'interpolation, mais élargit la marge de fonctionnement du système. On obtient alors :

$$\sin \Theta' = \sin (\theta + 1) - (n - 1 - k) . \frac{\sin (\theta + 1) - \sin \theta}{n - 1}$$

$$\cos \Theta' = \cos (\theta + 1) - (n - 1 - k). \frac{\cos (\theta + 1) - \cos \theta}{n - 1}$$

où l'on part de la valeur correspondant à $\Theta + 1$ (et non plus $\Theta$) à laquelle on retranche une quantité (et non plus une addition) ; ainsi, le nombre d'itérations de calcul devient égal à $(n - 1 - k)$, fonction décroissante de $\underline{k}$, et non plus égal à $\underline{k}$.

**Revendications**

1. Procédé d'extension de la gamme des fréquences des récurrences radar acceptables par un transformateur numérique d'images, ce dernier recevant d'une part des informations vidéo de type radar, dites récurrences et fournies en coordonnées polaires à une fréquence définie dite PRF, et d'autre part des informations de rotation d'un faisceau de type radar, indiquant la position angulaire ($\Theta$) du faisceau par rapport à une direction de référence définie (N), par incréments d'angle successifs ($\epsilon$) ayant une première valeur, le transformateur numérique d'images comportant une mémoire image (3) et des moyens (2) de conversion de coordonnées, recevant les récurrences en coordonnées polaires et les informations de rotation, délivrant les adresses (X, Y) en coordonnées cartésiennes où doivent être inscrites les informations vidéo dans la mémoire image ; le procédé étant caractérisé par le fait qu'il comporte une étape de transformation de la première valeur ($\epsilon$) de l'incrément d'angle en une deuxième valeur - ($\epsilon'$), en fonction de la PRF.

2. Procédé selon la revendication 1, caractérisé par le fait que la fréquence de ladite deuxième valeur ($\epsilon'$) d'incrément est choisie voisine de la PRF ou d'un sous-multiple de celle-ci.

3. Procédé selon l'une des revendications précédentes, caractérisé par le fait que les adresses délivrées par les moyens (2) de conversion de coordonnées sont fonction des incréments ($\epsilon'$) de deuxième valeur.

4. Procédé selon l'une des revendications précédentes, caractérisé par le fait que la deuxième valeur ($\epsilon'$) d'incrément d'angle est telle qu'il existe n-p incréments de deuxième valeur ($\epsilon'$) pour nincréments de première valeur - ($\epsilon$), n et p étant des nombres entiers positifs, avec coïncidence dans le temps des incréments de première et deuxième valeur une fois pour n incréments de première valeur ($\epsilon$), avec n choisi parmi les diviseurs du nombre total (N) des incréments de première valeur ($\epsilon$) pour 360° de rotation du faisceau.

5. Procédé selon la revendication 4, caractérisé par le fait que p est égal à 1.

6. Dispositif de mise en oeuvre du procédé selon l'une des revendications 1 à 5, caractérisé par le fait que ladite transformation de la première valeur ($\epsilon$) de l'incrément d'angle en une deuxième valeur ($\epsilon'$) est réalisée à l'aide de moyens de temporisation (16) recevant les tops successifs d'incréments d'angle de la première valeur ($\epsilon$) et leur conférant un retard tel qu'ils correspondent à la deuxième valeur.

7. Dispositif selon les revendications 5 et 6, caractérisé par le fait que ledit retard est de la forme k. $\Delta$, k étant le numéro d'ordre des tops de première valeur ($\epsilon$) reçus depuis l'instant de coïncidence des incréments de première et deuxième valeur, k variant de 0 à n - 2, et $\Delta$ étant de la forme $\Delta = \frac{\epsilon}{n-1}$, $\epsilon$ étant l'intervalle de temps entre deux tops de première valeur.

8. Dispositif selon l'une des revendications 6 ou 7, caractérisé par le fait que les moyens (2) de conversion de coordonnées comportent une mémoire (17) dans laquelle sont enregistrées les valeurs des fonctions trigonométriques des angles ($\Theta'$) correspondant à chacun des incréments de deuxième valeur ($\epsilon'$), ces incréments assurant l'adressage de cette mémoire (17).

9. Dispositif selon l'une des revendications 6 ou 7, caractérisé par le fait que les moyens (2) de conversion de coordonnées comportent une mémoire (18), dans laquelle sont enregistrées les valeurs de fonctions trigonométriques des angles ($\Theta$) correspondant à chacun des incréments de première valeur ($\epsilon$), ces incréments assurant l'adressage de cette mémoire (18), et des moyens (17) de détermination par interpolation des fonctions trigonométriques des angles - ($\Theta$) correspondant à chacun des incréments de deuxième valeur ($\epsilon'$).

10. Dispositif selon l'une des revendications 7 et 9, caractérisé par le fait que l'interpolation est obtenue par les formules suivantes :

$$\sin \Theta' = \sin \Theta + k. \frac{\sin (\Theta + 1) - \sin \Theta}{n - 1}$$

$$\cos \Theta' = \cos \Theta + k. \frac{\cos (\Theta + 1) - \cos \Theta}{n - 1}$$

où $\Theta$ est l'angle correspondant à un incrément de première valeur ($\epsilon$) et $\Theta'$ à un incrément de deuxième valeur ($\epsilon'$).

11. Dispositif selon les revendications 7 et 9, caractérisé par le fait que l'interpolation est obtenue par les formules suivantes :

$$\sin \Theta' = \sin (\Theta + 1) - (n - 1 - k). \frac{\sin (\Theta + 1) - \sin \Theta}{(n - 1)}$$

$$\cos \Theta' = \cos (\Theta + 1) - (n - 1 - k). \frac{\cos (\Theta + 1) - \cos \Theta}{(n - 1)}$$

où $\Theta$ est l'angle correspondant à un incrément de première valeur ($\epsilon$) et $\Theta'$, à un incrément de deuxième valeur ($\epsilon'$).

12. Transformateur numérique d'image comportant :

- des moyens (5) d'affichage de type télévision ;

- un dispositif (2) de conversion de coordonnées comportant un dispositif selon l'une des revendications 6 à 11 ;

- une mémoire image (4) ;

le transformateur étant caractérisé par le fait que les radiales sont mémorisées dans la mémoire image et affichée sur les moyens d'affichage aux angles ($\Theta'$) correspondant respectivement aux incréments de deuxième valeur ($\epsilon'$), assurant ainsi un affichage équiréparti et répétitif des radiales.

# FIG_1

0 192 562

# FIG_2

0 192 562

# FIG_3-a

# FIG_3-b

0 192 562

# FIG_4

0 192 562

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | US-A-4 392 137  (M.J. INTLEKOFER et al.) <br> * Colonne 1, ligne 56 - colonne 2, ligne 57; colonne 3, ligne 41 - colonne 4, ligne 53 * | 1,6,12 | G 01 S   7/44 |
| A | EP-A-0 099 832  (THOMSON-CSF) <br> * Page 5, lignes 19-29 * | 1,6,12 | |
| A | GB-A-2 003 355  (OKI ELECTRIC INDUSTRY) <br> * Page 1, lignes 51-80 * | 1,6,12 | |
| A | GB-A-2 047 040  (THE SECRETARY OF STATE FOR DEFENCE) <br> * Page 1, lignes 20-55 * | 1,6,12 | |

DOMAINES TECHNIQUES
RECHERCHES (Int. Cl.4)

G 01 S

Le présent rapport de recherche a été établi pour toutes les revendications

| Lieu de la recherche | Date d'achèvement de la recherche | Examinateur |
|---|---|---|
| LA HAYE | 27-05-1986 | MARCHAU M.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82